# FASCICULE DE BREVET EUROPEEN

(11) **EP 1 656 280 B1**
(45) Date de publication et mention de la délivrance du brevet: **20.12.2006**
(21) Numéro de dépôt: 04786336.0
(22) Date de dépôt: 20.08.2004
(51) Int. Cl.: B60R 16/02

(54) **AGENCEMENT POUR LE RACCORDEMENT ELECTRIQUE D'UN ELEMENT D'AMENAGEMENT INTERIEUR**
SYSTEM ZUR ELEKTRISCHEN VERBINDUNG EINES INNENAUSSTATTUNGSTEILS
SYSTEM FOR THE ELECTRICAL CONNECTION OF AN INTERIOR FITTING

(30) Priorité: 21.08.2003 FR 0310080
(43) Date de publication de la demande: 17.05.2006
(73) Titulaire: Renault s.a.s., 92100 Boulogne Billancourt (FR)
(72) Inventeur: LELONG, Yves, F-78370 Plaisir (FR); LEPIOUFLE, Gilles, F-78910 Boissets (FR); MASSON, Xavier, F-78310 Maurepas (FR)
(86) Numéro de dépôt international: PCT/FR2004/002171
(87) Numéro de publication internationale: WO 2005/021336

(56) Documents cités:
- EP-A- 1 093 959
- EP-A- 1 138 555
- US-A- 6 011 318
- PATENT ABSTRACTS OF JAPAN vol. 1998, no. 09, 31 juillet 1998 (1998-07-31) & JP 10 109574 A (MITSUBISHI CABLE IND LTD; NISSAN MOTOR CO LTD), 28 avril 1998 (1998-04-28)
- PATENT ABSTRACTS OF JAPAN vol. 1999, no. 12, 29 octobre 1999 (1999-10-29) & JP 11 198743 A (SUMITOMO WIRING SYST LTD), 27 juillet 1999 (1999-07-27)

## Description

L'invention concerne un agencement pour le raccordement électrique d'un élément d'aménagement intérieur.

L'invention concerne plus particulièrement un agencement pour le raccordement électrique d'un élément d'aménagement intérieur dont un pied est monté coulissant sur au moins un rail longitudinal porté par un plancher d'un véhicule automobile, du type dans lequel l'élément d'aménagement intérieur comporte au moins un faisceau électrique dont un premier connecteur est destiné à être raccordée à un second connecteur d'un faisceau électrique du véhicule courant sur le plancher.

On connaît de nombreux exemples d'agencements de ce type.

Il s'agit par exemple d'agencements permettant le raccordement électrique d'un siège comportant des moteurs de réglage et/ou un coussin de sécurité dont le gonflage peut être déclenché par l'intermédiaire d'un détonateur pyrotechnique à commande électrique.

Conventionnellement, ces agencements sont réalisés sans aménagement particulier.

Dans le cas du raccordement d'un siège avant à réglage longitudinal par exemple, le faisceau électrique du plancher comporte généralement pour seule protection une gaine renforcée qui fait saillie hors d'un élément d'habillage du plancher, tel qu'un panneau de moquette, sensiblement sous une zone du siège qui agencée en retrait des bords du siège, pour éviter qu'un pied d'un passager arrière du véhicule ne vienne accrocher le faisceau. Le faisceau électrique du siège pend généralement sous le siège.

Cette conception n'est pas satisfaisante en terme de protection des faisceaux.

En effet, un objet introduit ou glissé sous le siège peut venir en contact avec les faisceaux et en détériorer les connexions. Par ailleurs, les jeux important auxquels sont soumis les faisceaux lors des manipulations longitudinales du siège sont sources de faux contacts dans les connecteurs. JP-A-10109574 révèle les éléments selon le préambule de la revendication 1.

Pour remédier à ces inconvénients, l'invention propose des moyens de protection des connecteurs des faisceaux.

Dans ce but, l'invention propose un agencement du type décrit précédemment, caractérisé en ce que le pied porte un boîtier en deux parties, qui comporte intérieurement le premier connecteur et est susceptible de recevoir intérieurement le second connecteur, une première partie du boîtier étant fixée à demeure sur le pied et une seconde partie mobile du boîtier étant susceptible d'être fixée à la première partie pour fermer le boîtier et dissimuler les premier et second connecteurs.

Selon d'autres caractéristiques de l'invention :
- le premier connecteur est porté par la seconde partie mobile du boîtier,
- le pied présente sensiblement la forme d'une plaque verticale sur laquelle est fixée la première partie du boîtier, la seconde partie mobile du boîtier est articulée par rapport à la première partie du boîtier par l'intermédiaire d'une charnière, et elle est susceptible d'être fixée à la première partie du boîtier par des moyens d'emboîtement,
- la charnière est d'axe longitudinal et elle est agencée sensiblement à la jonction d'extrémités inférieures des première et deuxième parties du boîtier,
- les moyens d'emboîtement comportent au moins un pion qui s'étend à partir d'une face intérieure de la première partie du boîtier et qui est destiné à être reçu sans jeu dans un fût qui s'étend à partir d'une face intérieure de la seconde partie du boîtier qui porte le premier connecteur,
- les première et deuxième parties du boîtier sont réalisées en un matériau plastique et la charnière est venue de matière avec les première et deuxième parties du boîtier,
- le premier connecteur comporte un volet destiné verrouiller le second connecteur dans le premier connecteur.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective d'un agencement selon l'invention représenté en position d'ouverture du boîtier, le premier connecteur étant libre,
- la figure 2 est une vue en perspective d'un agencement selon l'invention représenté en position d'ouverture du boîtier, le premier connecteur recevant le second connecteur,
- la figure 3 est une vue en perspective d'un agencement selon l'invention représenté en position de fermeture du boîtier.

Dans la description qui va suivre, des chiffres de référence identiques désignent des pièces identiques ou ayant des fonctions similaires.

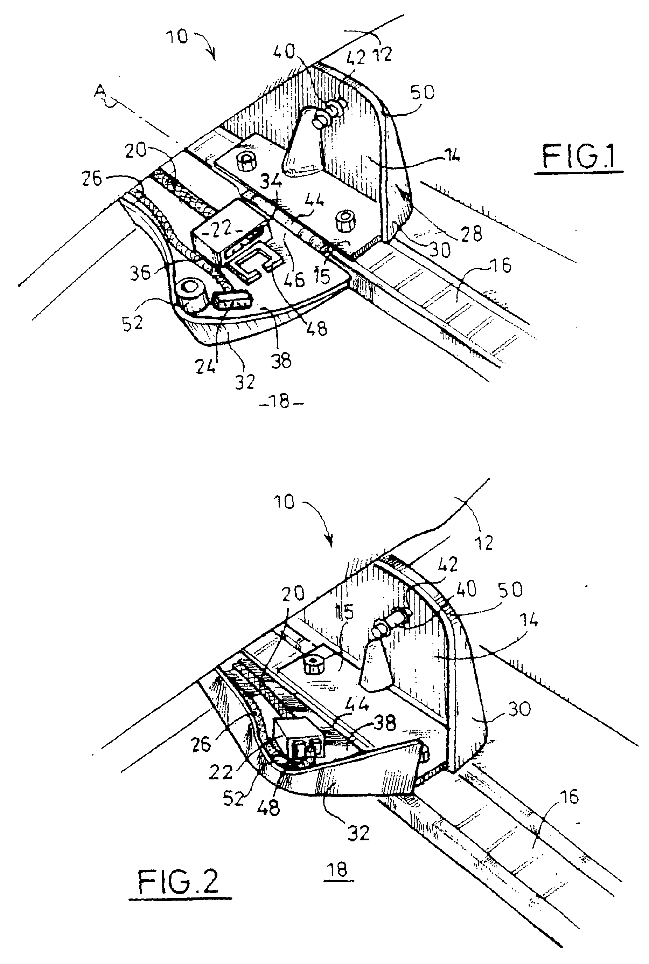

On a représenté à la figure 1 un agencement 10 pour le raccordement électrique d'un élément 12 d'aménagement intérieur, notamment un siège 12, dont un pied 14 est monté coulissant sur au moins un rail 16 longitudinal porté par un plancher 18 d'un véhicule automobile.

De manière connue, l'élément 12 d'aménagement intérieur comporte au moins un faisceau 20 électrique dont un premier connecteur 22 est destiné à être raccordée à un second connecteur 24 d'un faisceau électrique 26 du véhicule courant sur le plancher 18 du véhicule.

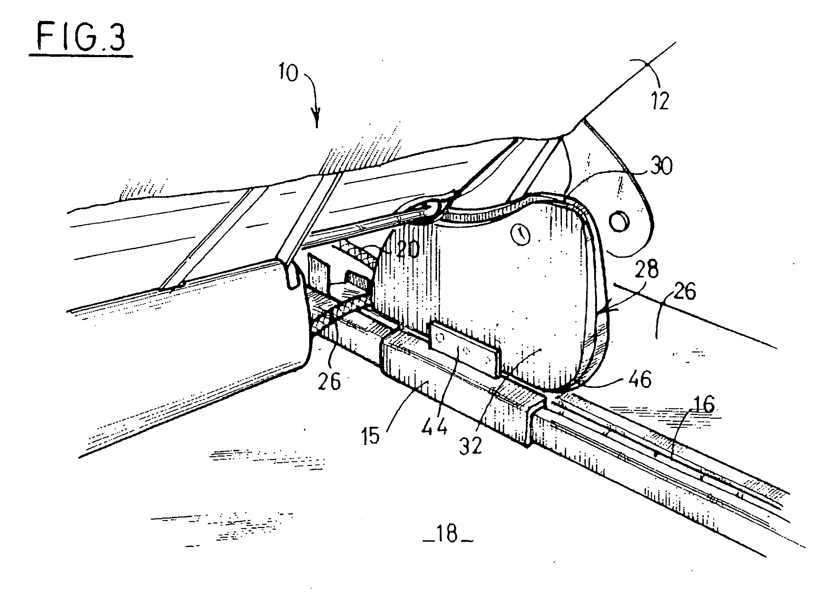

Conformément à l'invention, le pied 14 de l'élément 12 porte un boîtier 28 réalisé en deux parties 30 et 32, qui comporte intérieurement le premier connecteur 22 et est susceptible de recevoir intérieurement le second connecteur 24. Une première partie 30 du boîtier 28 est fixée à demeure sur le pied 14 et une seconde partie 32 mobile du boîtier 28 est mobile entre une position d'ouverture, représentée aux figures 1 et 2, et une position de fermeture, représentée à la figure 3, dans laquelle elle est susceptible d'être fixée à la première partie 30 pour fermer le boîtier 28 et dissimuler les premier et second connecteurs 22, 24.

Plus particulièrement, comme l'illustre la figure 1, le premier connecteur 22 est porté par la seconde partie 32 mobile du boîtier.

Le premier connecteur 22 est par exemple de forme parallélépipédique et il comporte une pluralité de fiches 34 qui sont complémentaires de fiches (non représentées) du second connecteur 24. Une face inférieure 36 du connecteur 26 est fixée sur une face intérieure 38 de la deuxième partie 32 du boîtier 28. Le premier connecteur 22 comporte par ailleurs un volet 48 qui est destiné à être refermé pour immobiliser tout fiche reçue dans le premier connecteur 22.

Dans le mode de réalisation préféré de l'invention, le pied 14 présente sensiblement la forme d'une plaque verticale sur laquelle est fixée la première partie 30 du boîtier 28. Cette première partie 30 comporte par exemple au moins un pion 40 qui traverse un perçage 42 de la plaque formant le pied 14. A son extrémité inférieure, le pied 14 comporte un organe 15 qui coopère avec la glissière 16.

La seconde partie 32 mobile du boîtier 28 est articulée par rapport à la première partie 30 du boîtier 28 par l'intermédiaire d'une charnière 44, représentée à la figure 1, et elle est susceptible d'être fixée à la première partie 30 du boîtier 28 par des moyens d'emboîtement.

Dans le mode de réalisation préféré de l'invention, la charnière 44 est agencée autour d'un axe "A" longitudinal parallèle à l'orientation de la glissière 16 et elle est agencée sensiblement à la jonction d'une extrémité inférieure 46 de la première partie 30 du boîtier 28 et de la deuxième partie 32 di boîtier 28.

Cette configuration n'est pas limitative de l'invention, et la charnière 44 pourrait être agencée sensiblement verticalement à une extrémité longitudinale des première et deuxième parties 30, 32 du boîtier 28.

Dans le mode de réalisation préféré de l'invention, les moyens d'emboîtement comportent au moins un pion qui s'étend à partir d'une face intérieure 50 de la première partie 30 du boîtier 28 et qui est destiné à être reçu sans jeu dans un fût 52 qui s'étend à partir de la face intérieure 38 de la seconde partie 32 du boîtier 28 qui porte le premier connecteur 22.

Avantageusement, ce pion est constitué du pion 40 de fixation de la première partie 30 qui traverse le perçage 42.

Dans le mode de réalisation préféré de l'invention, les première et deuxième parties 30, 32 du boîtier 28 sont réalisées en un matériau plastique et la charnière 44 est venue de matière avec les première et deuxième parties 30, 32 du boîtier 28.

De cette manière, on peut mouler en une seule pièce les deux parties du boîtier 28 lors de sa fabrication.

A l'issue de cette opération de moulage, la première partie 30 du boîtier 28 est emboîtée sur le pied 14 par l'intermédiaire de son pion 40 traversant le perçage 42. Le pied 14 est ensuite fixé sur la glissière 16, avec la deuxième partie 32 ouverte sur laquelle on monte le premier connecteur 22 comme représenté à la figure 1.

Puis on monte le deuxième connecteur 24 dans le premier connecteur 22. Comme représenté à la figure 2, on referme le volet 48 sur le deuxième connecteur 24 puis on referme la deuxième partie 32 du boîtier 28 sur la première partie 30 du boîtier 28 en emboîtant le fût 52 sur le pion 40 pour obtenir un boîtier 28 fermé comme représenté à la figure 3.

L'invention permet donc de réaliser très simplement un branchement discret d'un élément d'aménagement intérieur à l'intérieur d'un habitacle de véhicule automobile.

## Revendications

1. Agencement (10) pour le raccordement électrique d'un élément (12) d'aménagement intérieur dont un pied (14) est monté coulissant sur au moins un rail (16) longitudinal porté par un plancher (18) d'un véhicule automobile, du type dans lequel l'élément (12) d'aménagement intérieur comporte au moins un faisceau (20) électrique dont un premier connecteur (22) est destiné à être raccordée à un second connecteur (24) d'un faisceau électrique (26) du véhicule courant sur le plancher (18),
**caractérisé en ce que** le pied (14) porte un boîtier (28) en deux parties (30, 32), qui comporte intérieurement le premier connecteur (22) et est susceptible de recevoir intérieurement le second connecteur (24), une première partie (30) du boîtier (20) étant fixée à demeure sur le pied (14) et une seconde partie mobile (32) du boîtier (28) étant susceptible d'être fixée à la première partie (30) pour fermer le boîtier (28) et dissimuler les premier et second connecteurs (22, 24).

2. Agencement (10) selon la revendication précédente, **caractérisé en ce que** le premier connecteur (22) est porté par la seconde partie mobile (32) du boîtier (28).

3. Agencement (10) selon la revendication précédente, **caractérisé en ce que** le pied (14) présente sensiblement la forme d'une plaque (14) verticale sur laquelle est fixée la première partie (30) du boîtier (28), **en ce que** la seconde partie (32) mobile du boîtier (28) est articulée par rapport à la première partie (30) du boîtier (28) par l'intermédiaire d'une charnière (44), et **en ce qu'**elle est susceptible d'être fixée à la première partie (30) du boîtier par des moyens d'emboîtement.

4. Agencement (10) selon la revendication précédente, **caractérisé en ce que** la charnière (44) est d'axe longitudinal et **en ce qu'**elle est agencée sensiblement à la jonction d'extrémités inférieures des première et deuxième parties (30, 32) du boîtier (28).

5. Agencement (10) selon l'une des revendications 3 ou 4, **caractérisé en ce que** les moyens d'emboîtement comportent au moins un pion (40) qui s'étend à partir d'une face intérieure (50) de la première partie (30) du boîtier (28) et qui est destiné à être reçu sans jeu dans un fût (52) qui s'étend à partir d'une face intérieure (38) de la seconde partie (32) du boîtier (28) qui porte le premier connecteur (22).

6. Agencement selon l'une quelconque des revendications précédentes, **caractérisé en ce que** les première et deuxième parties (30, 32) du boîtier (28) sont réalisées en un matériau plastique et **en ce que** la charnière (44) est venue de matière avec les première et deuxième parties (30, 32) du boîtier (28).

7. Agencement selon l'une quelconque des revendications précédentes, **caractérisé en ce que** le premier connecteur (22) comporte un volet (48) destiné verrouiller le second connecteur (24) dans le premier connecteur (22).

## Claims

1. Arrangement (10) for the electrical connection of an interior fitting element (12) of which a base (14) is mounted so as to slide on at least one longitudinal rail (16) supported by a floor (18) of a motor vehicle, of the type in which the interior fitting element (12) comprises at least one electric loom (20) of which a first connector (22) is designed to be connected to a second connector (24) of an electric loom (26) of the vehicle running on the floor (18),
**characterized in that** the base (14) supports a case (28) in two parts (30, 32), which comprises internally the first connector (22) and is capable of receiving internally the second connector (24), a first part (30) of the case (20) being attached permanently to the base (14) and a second movable part (32) of the case (28) being capable of being attached to the first part (30) to close the case (28) and hide the first and second connectors (22, 24).

2. Arrangement (10) according to the preceding claim, **characterized in that** the first connector (22) is supported by the second movable part (32) of the case (28).

3. Arrangement (10) according to the preceding claim, **characterized in that** the base (14) has substantially the shape of a vertical plate (14) onto which the first part (30) of the case (28) is attached, **in that** the second, movable, part (32) of the case (28) is articulated relative to the first part (30) of the case (28) by means of a hinge (44), and **in that** it is capable of being attached to the first part (30) of the case by interlocking means.

4. Arrangement (10) according to the preceding claim, **characterized in that** the hinge (44) has a longitudinal axis and **in that** it is arranged substantially at the junction of bottom ends of the first and second parts (30, 32) of the case (28).

5. Arrangement (10) according to one of claims 3 or 4, **characterized in that** the interlocking means comprise at least one post (40) which extends from an inner face (50) of the first part (30) of the case (28) and is designed to be received without clearance in a cylinder (52) that extends from an inner face (38) of the second part (32) of the case (28) which supports the first connector (22).

6. Arrangement according to any one of the preceding claims, **characterized in that** the first and second parts (30, 32) of the case (28) are made of plastic and **in that** the hinge (44) is made of the same material as the first and second parts (30, 32) of the case (28).

7. Arrangement according to any one of the preceding claims, **characterized in that** the first connector (22) comprises a flap (48) designed to lock the second connector (24) into the first connector (22).

## Patentansprüche

1. System (10) zur elektrischen Verbindung eines Innenausstattungsteils (12), wobei ein Fuß (14) gleitend auf mindestens einer Längsschiene (16) montiert ist, die von einem Boden (18) eines Kraftfahrzeugs getragen wird, wobei der Innenausstattungsteil (12) mindestens ein elektrisches Bündel (20) umfasst, dessen erster Stecker (22) dazu bestimmt ist, an einen zweiten Stecker (24) eines elektrischen Bündels (26) des Fahrzeugs, das auf dem Boden (18) verläuft, angeschlossen zu werden,
**dadurch gekennzeichnet, dass** der Fuß (14) ein Gehäuse (28) aus zwei Teilen (30, 32) trägt, das innen den ersten Stecker (22) umfasst und innen den zweiten Stecker (24) aufnehmen kann, wobei ein erster Teil (30) des Gehäuses (20) fest auf dem Fuß (14) befestigt ist und ein zweiter beweglicher Teil (32) des Gehäuses (28) an dem ersten Teil (30) befestigt werden kann, um das Gehäuse (28) zu verschließen und den ersten und den zweiten Stecker (22, 24) zu verdecken.

2. System (10) nach dem vorhergehenden Anspruch, **dadurch gekennzeichnet, dass** der erste Stecker (22) von dem zweiten beweglichen Teil (32) des Gehäuses (28) getragen wird.

3. System (10) nach dem vorhergehenden Anspruch, **dadurch gekennzeichnet, dass** der Fuß (14) im Wesentlichen die Form einer vertikalen Platte (14) aufweist, an der der erste Teil (30) des Gehäuses (28) befestigt ist, dass der zweite bewegliche Teil (32) des Gehäuses (28) am ersten Teil (30) des Gehäuses (28) über ein Scharnier (44) angelenkt ist, und dass er am ersten Teil (30) des Gehäuses durch Einsteckmittel befestigt werden kann.

4. System (10) nach dem vorhergehenden Anspruch, **dadurch gekennzeichnet, dass** das Scharnier (44) eine Längsachse aufweist und dass es im Wesentlichen an der Verbindungsstelle der unteren Enden des ersten und des zweiten Teils (30, 32) des Gehäuses (28) angeordnet ist.

5. System (10) nach einem der Ansprüche 3 oder 4, **dadurch gekennzeichnet, dass** die Einsteckmittel mindestens einen Stift (40) umfassen, der sich von einer Innenseite (50) des ersten Teils (30) des Gehäuses (28) ausgehend erstreckt und dazu bestimmt ist, ohne Spiel in einem Schaft (52) aufgenommen zu werden, der sich von einer Innenseite (38) des zweiten Teils (32) des Gehäuses (28), das den ersten Stecker (22) trägt, ausgehend erstreckt.

6. System nach einem der vorhergehenden Ansprüche, **dadurch gekennzeichnet, dass** der erste und zweite Teil (30, 32) des Gehäuses (28) aus einem Kunststoff hergestellt sind, und dass das Scharnier (44) aus einem Material mit dem ersten und zweiten Teil (30, 32) des Gehäuses (28) ist.

7. System nach einem der vorhergehenden Ansprüche, **dadurch gekennzeichnet, dass** der erste Stecker (22) eine Klappe (48) umfasst, die dazu bestimmt ist, den zweiten Stecker (24) in dem ersten Stecker (22) zu verriegeln.
